(19) Europäisches Patentamt / European Patent Office / Office européen des brevets

(11) **EP 3 839 480 A1**

(12) **EUROPEAN PATENT APPLICATION**

(43) Date of publication:
23.06.2021 Bulletin 2021/25

(21) Application number: 19218083.4

(22) Date of filing: 19.12.2019

(51) Int Cl.:
*G01N 21/25* (2006.01)          *G01N 21/57* (2006.01)
*G01J 3/50* (2006.01)           *G01N 21/27* (2006.01)
*G06N 3/08* (2006.01)           *G01J 3/46* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(71) Applicant: **X-Rite Switzerland GmbH**
**8105 Regensdorf (CH)**

(72) Inventors:
• **Grisins, Pjotrs**
**CH-8105 Regensdorf (CH)**
• **Sormaz, Milos**
**CH-8105 Regensdorf (CH)**
• **Kettler, Wilhelm**
**deceased (CH)**

(74) Representative: **Jonas, Hans-Hermann**
**X-Rite Switzerland GmbH**
**Althardstrasse 70**
**8105 Regensdorf (CH)**

(54) **TEXTURE PREDICTION WITH MACHINE LEARNING**

(57)    Disclosed is a computer-implemented method of training a likelihood-based computational model, such as machine learning algorithm, for determining a formula for a pigment coating, and a computer-implemented method of determining a texture of a surface coated with a pigment using the trained likelihood-based computational model.

```
┌─────────────────────────────┐
│            S11              │
│  acquire formula texture data │
└─────────────────────────────┘
               │
               ▼
┌─────────────────────────────┐
│            S12              │
│   determine model parameter  │
│            data             │
└─────────────────────────────┘
```

**Fig. 1**

**EP 3 839 480 A1**

**Description**

**FIELD OF THE INVENTION**

The present invention relates to a computer-implemented method of training a likelihood-based computational model for determining a formula for a pigment coating and a computer-implemented method of determining a texture of a surface coated with a pigment, a corresponding computer program, a program storage medium storing such a program and a computer for executing the program, as well as a system for determining a texture of a surface coated with a pigment, the system comprising an electronic data storage device and the aforementioned computer.

**TECHNICAL BACKGROUND**

An effect paint is paint that exhibits texture and is used mostly in automotive refinish. In this context, by paint texture e.g. a coarseness (a perceived "graininess" or "roughness", which is mostly apparent in diffuse lighting conditions, e. g. under heavy overcast sky) and a sparkle (single bright reflection spots we see when the paint surface is illuminated by a directional source, e.g. the sun) are meant. Effect paints contain one or more effect colourants (aka effect pigments) mixed together with non-effect colourants. Effect colourants come in two main categories: aluminium flakes, which provide metallic gloss, and interference pigments, which are responsible for colour variation when observing the surface from different angle ("pearl" or "colour flop" effect). Non-effect colourants are pigments which provide solid colour, such as pigments used in wall paints.

Formulation of effect paints is a complex process. Imagine, the formula of an unknown paint should be determined. Currently, the typical workflow for doing so may be outlined as follow:

1. A professional colourist receives an effect paint sample (the so-called "standard sample").

2. The colourist then measures the spectral properties (a list of reflectance spectra in the visible range acquired with different illumination and pickup positions) of the sample with a goniospectrophotometer.

3. Then the colourist searches a database of formulae (a formula is a recipe saying how much of each pigment to mix to get a paint with the required reflectance properties) for a formula which matches most closely the measured spectra.

4. In case there is a formula close enough, the colourist may try to correct it by changing the concentrations slightly either manually, or using formulation software.

5. If there is no good enough formula found, a new formula must be made up. This starts with identifying which effect pigments are present in the sample, which can be done with an optical microscope. It requires effort and experience to identify single microscopic colourant flakes.

6. When the effect pigments are identified, the colourist can formulate the recipe either by intuition (gauging the relative abundance of different pigment flakes that they saw under the microscope) or using available formulation software.

7. The formulated recipe has to be mixed and sprayed on a surface for testing. This surface becomes the trial sample, which is compared to the standard sample received in step 1. If the appearance does not match within some specified tolerance, the recipe has to be corrected. The correction process is analogous to the initial formulation, as outlined in steps 2 to 6.

The present invention has the object of providing a method of automated texture prediction, in particular to render the above-outlined process more efficient.

Aspects of the present invention, examples and exemplary steps and their embodiments are disclosed in the following. Different exemplary features of the invention can be combined in accordance with the invention wherever technically expedient and feasible.

**GENERAL DESCRIPTION OF THE INVENTION**

In this section, a description of the general features of the present invention is given for example by referring to possible embodiments of the invention.

In general, the invention reaches the afore-mentioned object by providing, in a first aspect, a computer-implemented method of training a likelihood-based computational model for determining a formula for a pigment coating. A formula is a recipe saying how much of each pigment to mix to get a paint with the required reflectance and texture properties. The pigments are colour pigments. The method according to the first aspect comprises executing, on at least one processor of at least one computer, the following exemplary steps which are executed by the at least one processor.

In a (for example first) exemplary step, formula texture data is acquired which describes a formula of pigment concentrations and an associated set of texture parameters, the set of texture parameters being defined by sparkle texture in dependence on a finite number of measurement geometries defined by illumination directions and detection directions relative to a surface coated with the respective formula. The term of sparkle texture describes at least one of a sparkle grade and a coarseness, a colour variation, a sparkle area or a sparkle intensity.

In a (for example second) exemplary step, model parameter data describing parameters of a likelihood-based computational model for establishing a relation between a set of texture parameters and the respective formula is determined. The model parameter data is determined for example by inputting the formula texture data into a function which establishes a likelihood-based relation between formulae of pigment concentrations and associated texture parameters. The function is in one example acquired as input by the method according to the first aspect. The computational model comprises or consists of a machine learning algorithm, and the method according to the first aspects aims at training the machine learning algorithm to determine, on a basis of likelihood, texture data associated with a certain combination of pigment concentrations. The parameters are adaptive parameters, for example weights, and in one example define a tree structure and a leaf score of the computational model. In one example, a classification and regression tree is part of the computational model. In a further example, a boosted trees algorithm is part of the computational model. In an even further example, a bagged trees algorithm is part of the computational model.

Additionally, the invention reaches the aforementioned object by providing, in a second aspect, a computer-implemented method of determining a texture of a surface coated with a pigment. The pigments are colour pigments. The method according to the second aspect comprises executing, on at least one processor of at least one computer, the following exemplary steps which are executed by the at least one processor.

In a (for example first) exemplary step, spectral pigment sample data is acquired which describes a set of texture parameters of the coated surface generated by using a finite number of measurement geometries defined by illumination and detection positions.

In a (for example second) exemplary step, formula prediction data is determined which describes a formula for the coating associated with a set of texture parameters which matches, according to a certain likelihood determined by the computational model, the set of texture parameters described by the spectral pigment sample data. The formula prediction data is determined by inputting the spectral pigment sample data into a function which establishes a likelihood-based relation between formulae of pigment concentrations (for example, colour pigment concentrations) and associated texture parameters, the function being part of a computational model which has been trained by executing the method according to the first aspect. The trained computational model is in one example acquired as input by the method according to the second aspect.

In an example of the method according to the second aspect, coating formula data is acquired which describes formulae for generating a pigment coating with a predetermined set of texture parameters. Then matching formula data is determined which describes whether there is formula described by the coating formula data having a predetermined set of texture parameters which matches the texture data described by the spectral pigment sample data to a predetermined extent. The predetermined extent may be defined for example as a minimum overlap or maximum difference between values of texture parameters described by the texture data described by the spectral pigment sample data and the values of the texture parameters of the formula described by the coating formula data. The matching formula data is determined based on the spectral pigment sample data and the coating formula data. The formula prediction data is then determined if the matching formula data describes that there is no formula described by the coating formula data having a predetermined set of texture parameters which matches the set of texture parameters described by the spectral pigment sample data to the predetermined extent.

In a third aspect, the invention is directed to a computer program which, when running on at least one processor (for example, a processor) of at least one computer (for example, a computer) or when loaded into at least one memory (for example, a memory) of at least one computer (for example, a computer), causes the at least one computer to perform the above-described method according to the first aspect. The invention may alternatively or additionally relate to a (physical, for example electrical, for example technically generated) signal wave, for example a digital signal wave, such as an electromagnetic carrier wave carrying information which represents the program, for example the aforementioned program, which for example comprises code means which are adapted to perform any or all of the steps of the method according to the first aspect. The signal wave is in one example a data carrier signal carrying the aforementioned computer program. Such a data carrier signal also is an aspect of the invention. A computer program stored on a disc is a data file, and when the file is read out and transmitted it becomes a data stream for example in the form of a (physical, for example electrical, for example technically generated) signal. The signal can be implemented as the signal wave, for example as the electromagnetic carrier wave which is described herein. For example, the signal, for example the signal wave is constituted to be transmitted via a computer network, for example LAN, WLAN, WAN, mobile network, for example the internet. For example, the signal, for example the signal wave, is constituted to be transmitted by optic or acoustic data transmission. The invention according to the second aspect therefore may alternatively or additionally relate to a data stream representative of the aforementioned program.

In a fourth aspect, the invention is directed to a computer-readable program storage medium on which the program according to the second aspect is stored. The program storage medium is for example non-transitory.

In a fifth aspect, the invention is directed to at least one computer (for example, a computer), comprising at least one processor (for example, a processor) and at least one memory (for example, a memory), wherein the program according to the second aspect is running on the processor or is loaded into the memory, or wherein the at least one computer comprises the computer-readable program storage medium according to the third aspect.

In a sixth aspect, the invention is directed to a system for determining a texture of a surface coated with a pigment, comprising:

a) the at least one computer according to the fifth aspect; and
b) at least one electronic data storage device storing the spectral pigment sample data and coating formula data, wherein the at least one computer is operably coupled to

- the at least one electronic data storage device for acquiring, from the at least one electronic data storage device, the spectral pigment sample data and coating formula data, and
- the at least one electronic data storage device for storing, in the at least one electronic data storage device, at least the formula prediction data.

In an example, the system according to the sixth aspect further comprises a goniospectrophotometer configured to detect, from the surface coated with the pigment, optical signals and transforming these signals into electronic signals corresponding to the spectral pigment sample data. For example, the goniospectrophotometer is operatively coupled to the at least one electronic data storage device for storing, in the at least one electronic data storage device, the spectral pigment sample data. A goniospectrophotometer is a spectrophotometer able to provide spectra for directed illumination for different geometries. This is in contrast to sphere spectrophotometers which provide only diffuse illumination.

Alternatively or additionally, the invention according to the fifth aspect is directed to a for example non-transitory computer-readable program storage medium storing a program for causing the computer according to the fourth aspect to execute the data processing steps of the method according to the first aspect.

## DEFINITIONS

In this section, definitions for specific terminology used in this disclosure are offered which also form part of the present disclosure.

The method in accordance with the invention is for example a computer implemented method. For example, all the steps or merely some of the steps (i.e. less than the total number of steps) of the method in accordance with the invention can be executed by a computer (for example, at least one computer). An embodiment of the computer implemented method is a use of the computer for performing a data processing method. An embodiment of the computer implemented method is a method concerning the operation of the computer such that the computer is operated to perform one, more or all steps of the method.

The computer for example comprises at least one processor and for example at least one memory in order to (technically) process the data, for example electronically and/or optically. The processor being for example made of a substance or composition which is a semiconductor, for example at least partly n- and/or p-doped semiconductor, for example at least one of II-, III-, IV-, V-, VI-semiconductor material, for example (doped) silicon and/or gallium arsenide. The calculating or determining steps described are for example performed by a computer. Determining steps or calculating steps are for example steps of determining data within the framework of the technical method, for example within the framework of a program. A computer is for example any kind of data processing device, for example electronic data processing device. A computer can be a device which is generally thought of as such, for example desktop PCs, notebooks, netbooks, etc., but can also be any programmable apparatus, such as for example a mobile phone or an embedded processor. A computer can for example comprise a system (network) of "sub-computers", wherein each sub-computer represents a computer in its own right. The term "computer" includes a cloud computer, for example a cloud server. The term computer includes a server resource. The term "cloud computer" includes a cloud computer system which for example comprises a system of at least one cloud computer and for example a plurality of operatively interconnected cloud computers such as a server farm. Such a cloud computer is preferably connected to a wide area network such as the world wide web (WWW) and located in a so-called cloud of computers which are all connected to the world wide web. Such an infrastructure is used for "cloud computing", which describes computation, software, data access and storage services which do not require the end user to know the physical location and/or configuration of the computer delivering a specific service. For example, the term "cloud" is used in this respect as a metaphor for the Internet (world wide web). For example, the cloud provides computing infrastructure as a service (IaaS). The cloud computer can function as a virtual host for an operating system and/or data processing application which is used to execute the method of the invention. The cloud computer is for example an elastic compute cloud (EC2) as provided by Amazon Web Services™. A computer for example comprises interfaces in order to receive or output data and/or perform an analogue-to-digital conversion. The data are for example data which represent physical properties and/or which are generated from technical signals. The technical signals are for example generated by means of (technical) detection devices such as for example a spectrometer and/or spectrophotometer (such as a goniospectrophotometer) or colorimeter, wherein the technical signals are for example electrical or optical signals. The technical signals for example represent the data received or outputted by the computer. The computer is preferably operatively coupled to a display device which allows information outputted by the computer to be displayed, for example to a user. An example of a display device would be a standard computer monitor comprising for example a liquid crystal display operatively coupled to the computer for receiving display control data from the computer for generating signals used to display image information content on the display device.

The invention also relates to a program which, when running on a computer, causes the computer to perform one or more or all of the method steps described herein and/or to a program storage medium on which the program is stored (in particular in a non-transitory form) and/or to a computer comprising said program storage medium and/or to a (physical, for example electrical, for example technically generated) signal wave, for example a digital signal wave, such as an electromagnetic carrier wave carrying information which represents the program, for example the aforementioned program, which for example comprises code means which are adapted to perform any or all of the method steps described herein. The signal wave is in one example a data carrier signal carrying the aforementioned computer program.

Within the framework of the invention, computer program elements can be embodied by hardware and/or software (this includes firmware, resident software, micro-code, etc.). Within the framework of the invention, computer program elements can take the form of a computer program product which can be embodied by a computer-usable, for example computer-readable data storage medium comprising computer-usable, for example computer-readable program instructions, "code" or a "computer program" embodied in said data storage medium for use on or in connection with the instruction-executing system. Such a system can be a computer; a computer can be a data processing device comprising means for executing the computer program elements and/or the program in accordance with the invention, for example a data processing device comprising a digital processor (central processing unit or CPU) which executes the computer program elements, and optionally a volatile memory (for example a random access memory or RAM) for storing data used for and/or produced by executing the computer program elements. Within the framework of the present invention, a computer-usable, for example computer-readable data storage medium can be any data storage medium which can include, store, communicate, propagate or transport the program for use on or in connection with the instruction-executing system, apparatus or device. The computer-usable, for example computer-readable data storage medium can for example be, but is not limited to, an electronic, magnetic, optical, electromagnetic, infrared or semiconductor system, apparatus or device or a medium of propagation such as for example the Internet. The computer-usable or computer-readable data storage medium could even for example be paper or another suitable medium onto which the program is printed, since the program could be electronically captured, for example by optically scanning the paper or other suitable medium, and then compiled, interpreted or otherwise processed in a suitable manner. The data storage medium is preferably a non-volatile data storage medium. The computer program product and any software and/or hardware described here form the various means for performing the functions of the invention in the example embodiments. The computer and/or data processing device can for example include a guidance information device which includes means for outputting guidance information. The guidance information can be outputted, for example to a user, visually by a visual indicating means (for example, a monitor and/or a lamp) and/or acoustically by an acoustic indicating means (for example, a loudspeaker and/or a digital speech output device) and/or tactilely by a tactile indicating means (for example, a vibrating element or a vibration element incorporated into an instrument). For the purpose of this document, a computer is a technical computer which for example comprises technical, for example tangible components, for example mechanical and/or electronic components. Any device mentioned as such in this document is a technical and for example tangible device.

The expression "acquiring data" for example encompasses (within the framework of a computer implemented method) the scenario in which the data are determined by the computer implemented method or program. Determining data for example encompasses measuring physical quantities and transforming the measured values into data, for example digital data, and/or computing (and e.g. outputting) the data by means of a computer and for example within the framework of the method in accordance with the invention. A step of "determining" as described herein for example comprises or consists of issuing a command to perform the determination described herein. For example, the step comprises or consists of issuing a command to cause a computer, for example a remote computer, for example a remote server, for example in the cloud, to perform the determination. Alternatively or additionally, a step of "determination" as described herein for example comprises or consists of receiving the data resulting from the determination described herein, for example receiving the resulting data from the remote computer, for example from that remote computer which has been caused to perform the determination. The meaning of "acquiring data" also for example encompasses the scenario in which the data are received or retrieved by (e.g. input to) the computer implemented method or program, for example from another program, a previous method step or a data storage medium, for example for further processing by the computer implemented method or program. Generation of the data to be acquired may but need not be part of the method in accordance with the invention. The expression "acquiring data" can therefore also for example mean waiting to receive data and/or receiving the data. The received data can for example be inputted via an interface. The expression "acquiring data" can also mean that the computer implemented method or program performs steps in order to (actively) receive or retrieve the data from a data source, for instance a data storage medium (such as for example a ROM, RAM, database, hard drive, etc.), or via the interface (for instance, from another computer or a network). The data acquired by the disclosed method or device, respectively, may be acquired from a database located in a data storage device which is operably to a computer for data transfer between the database and the computer, for example from the database to the computer. The computer acquires the data for use as an input for steps of determining data. The determined data can be output again to the same or another database to be stored for later use. The database or database used for implementing the disclosed method can be located on network data storage device or a network server (for example, a cloud data storage device or a cloud server) or a local data storage device (such as a mass storage device operably connected to at least one computer executing the disclosed method). The data can be made "ready for use" by performing an additional step before the acquiring step. In accordance with this additional step, the data are generated in order to be acquired. The data are for example detected or captured (for example by an analytical device). Alternatively or additionally, the data are inputted in accordance with the additional step, for instance via interfaces. The data generated can for example be inputted (for instance into the computer). In accordance with the additional step (which precedes the acquiring step), the data can also be provided by performing the additional step of storing the data in a data storage medium (such as for example a ROM, RAM, CD and/or hard drive), such that they are ready for use within the framework of the method or program in accordance with the invention. The step of "acquiring data" can therefore also involve commanding a device to obtain and/or provide the data to be acquired. In order to distinguish the different data used by the present method, the data are denoted (i.e. referred to) as "XY data" and the like and are defined in terms of the information which they describe, which is then preferably referred to as "XY information" and the like.

## BRIEF DESCRIPTION OF THE DRAWINGS

In the following, the invention is described with reference to the appended figures which give background explanations and represent specific embodiments of the invention. The scope of the invention is however not limited to the specific features disclosed in the context of the figures, wherein

Fig. 1   illustrates a basic flow of the method according to the first aspect;
Fig. 2   illustrates a basic flow of the method according to the second aspect;
Fig. 3   shows examples of predictors;
Fig. 4   illustrates an example classification and regression tree for coarseness prediction;
Fig. 5   shows a comparison of three different machine learning algorithms for texture prediction; and
Fig. 6   is a schematic illustration of the system according to the sixth aspect.

## DESCRIPTION OF EMBODIMENTS

The present invention is directed to a method of texture prediction with machine learning which can help formulating as required by step 6 of the currently applied process as explained in the background of the invention. Namely if in step 2 as explained in the background of the invention the colourist measured the standard sample with a device that takes texture images (such as Kohinoor), then they know the texture parameters (coarseness and sparkle grade which can be calculated from the image with available texture scales).

Then in the formulation step 6 it would be very helpful if the colourist knows the approximate values of the texture parameters when he creates a recipe and before spraying it in step 7 as outlined in the background of the invention. For example, if they mix together 10% of aluminium flakes and 90% of opaque white, then they would be interested how much sparkle this mixture will exhibit when sprayed on a surface.

This is exactly what this invention is about: to predict texture parameters for a given recipe without spraying the surface. This can reduce the number of trial samples, and so reduce total cost and waste for the customer.

The algorithm needs learning data, different for each customer and which can be obtained from customers' databases of recipes. The predictors are the concentrations of pigments for each recipe, and the results are the texture parameters.

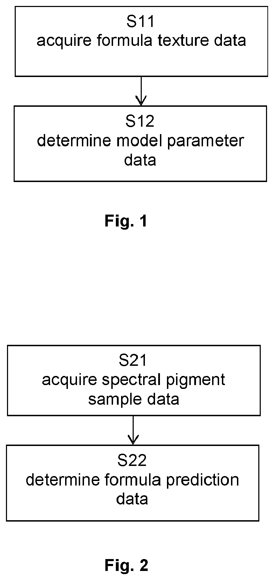

Fig. 1 illustrates the basic steps of the method according to the first aspect, in which step S11 encompasses acquisition of the formula texture data and step S12 encompasses determination of the model parameter data.

Fig. 2 illustrates the basic steps of the method according to the second aspect, in which step S21 encompasses acquisition of the spectral pigment sample data and step S22 encompasses determination of the formula prediction data.

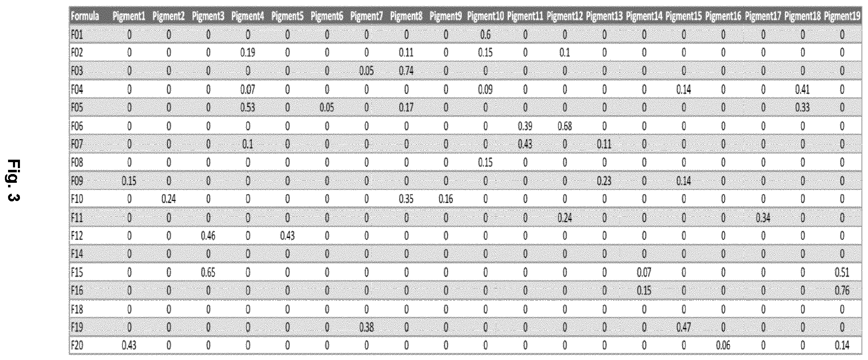

Fig. 3 shows examples of concentrations of different pigments.

The following explains the machine learning algorithms of random forests and XGBoost as applied to the disclosed methods according to the first and second aspect.

Input data for the machine learning (ML) algorithm are formulae, where each formula is a vector of real numbers whose elements are pigment concentration. For instance, the formula of a sample is a vector

$$x_i = \{0, 0.381717, 0, 0.195079, 0, ..., 0\}.$$

The output of the algorithm is a pair of real numbers for each recipe and measurement geometry, which are "sparkle grade" and "coarseness" or additionally "diffuse coarseness" and "colour variation". For instance, if there are five measurement geometries, the output of a sample may look like

$$y_i = \{\{0.2, 1.1\}, \{2.4, 3.1\}, \{4.5, 12.4\}, \{4.4, 14.3\}, \{2.1, 5.4\}\}.$$

In the following the input data is named "features", and output data is named "targets".

The supervised ML algorithms used in the disclosed approach are boosted and bagged treas. Both approaches are used for each customer's colour formulation and their performance is compared, and later for this customer the approach that proved to be better is used.

In both cases, the algorithm can be represented as a function which predicts the targets given the features

$$\widehat{y}_i = F(\theta, x_i),$$

where $\theta$ is a list of internal model parameters, and $\widehat{y}_i$ are the predicted targets.

By training the algorithm we mean finding such a list of parameters \theta so that our prediction $\widehat{y}_i$ is as close as possible to the measured value $y_i$ for each sample used in training. When the algorithm is trained it can be used to predict $y_i$ for unknown samples given their features $x_i$ by assuming

$$y_i = \widehat{y}_i.$$

Classification and regression trees

A classification and regression tree (CART) is an ML algorithm that uses a tree-like model of decisions and their possible consequences, containing only conditional control statements. In CARTs each internal node represents a "test" on an attribute (e.g. whether increasing the concentration of the first pigment reduces or enhances the coarseness) and each branch represents the outcome. The path from root to leaf represents classification or regression rules.

Prediction outcome of a single tree is

$$\widehat{y}_i = f_k(\theta_k, x_i),$$

where $\theta_k$ is a list of parameters specific to this particular tree (e.g. tree structure and the leaf score) and $f_k$ is the function encapsulating the tree algorithm.

Boosted trees

A boosted trees algorithm gives the targets prediction based on accumulated results of many CARTs,

$$\hat{y}_i = \sum_{k=1}^{K} f_k(x_i), f_k \in \mathcal{F}$$

where K is the number of trees, f is a function in the functional space F, and F is the set of all possible CARTs.

Training is done by minimizing the objective function

$$\text{obj} = \sum_{i=1}^{n} l(y_i, \hat{y}_i^{(t)}) + \sum_{i=1}^{t} \Omega(f_i)$$

where l is the training loss and $\Omega$ is the regularization.

Learning of the tree structure is done additively by adding one new tree at a time. We write the prediction value at step t as $\hat{y}_i^{(t)}$. Then we have

$$\hat{y}_i^{(0)} = 0$$
$$\hat{y}_i^{(1)} = f_1(x_i) = \hat{y}_i^{(0)} + f_1(x_i)$$
$$\hat{y}_i^{(2)} = f_1(x_i) + f_2(x_i) = \hat{y}_i^{(1)} + f_2(x_i)$$
$$\dots$$
$$\hat{y}_i^{(t)} = \sum_{k=1}^{t} f_k(x_i) = \hat{y}_i^{(t-1)} + f_t(x_i)$$

The tree added is one that optimized our objective

$$\text{obj}^{(t)} = \sum_{i=1}^{n} l(y_i, \hat{y}_i^{(t)}) + \sum_{i=1}^{t} \Omega(f_i)$$
$$= \sum_{i=1}^{n} l(y_i, \hat{y}_i^{(t-1)} + f_t(x_i)) + \Omega(f_t) + \text{constant}$$

We use mean squared error as our loss function, so

$$l = \sum_{i} (y_i - \hat{y}_i)$$

and the objective function becomes after Taylor-expanding it to the second order

$$\text{obj}^{(t)} = \sum_{i=1}^{n} [l(y_i, \hat{y}_i^{(t-1)}) + g_i f_t(x_i) + \frac{1}{2} h_i f_t^2(x_i)] + \Omega(f_t) + \text{constant}$$

where

$$g_i = \partial_{\hat{y}_i^{(t-1)}} l\left(y_i, \hat{y}_i^{(t-1)}\right)$$

$$h_i = \partial_{\hat{y}_i^{(t-1)}}^2 l\left(y_i, \hat{y}_i^{(t-1)}\right)$$

.

The regularization term controls the tree complexity and is given by

$$\Omega(f) = \gamma T + \frac{1}{2}\lambda \sum_{j=1}^{T} w_j^2$$

where w is the vector of scores of leaves, T is the number of leaves and $\gamma$ and $\lambda$ are external parameters optimized for the best overall ensemble performance.

Boosted trees algorithm, for instance, is implemented in an open-source XGBoost library (Apache 2.0 license).

<u>Decision trees</u>

As the single tree $f_k$ algorithm we can use any of the following algorithms:

ID3 (Iterative Dichotomiser 3)
C4.5 (successor of ID3)
CART (Classification And Regression Tree)
Chi-square automatic interaction detection (CHAID). Performs multi-level splits when computing classification trees.

For illustration purposes, the CART algorithm is explained in the follwing:
A CART $f_k$ is a conditional function of *n* arguments giving a constant value $C_{1,2,...,j,k}$ depending on a list of conditions on the arguments:

$$f_k(\theta_k, x_1, x_2, ..., x_n) = C_{1,k} \; if \; x_1 \in \Theta_{1,1}, x_2 \in \Theta_{1,2}, ... \; x_n \in \Theta_{1,n}$$

$$f_k(\theta_k, x_1, x_2, ..., x_n) = C_{2,k} \; if \; x_1 \in \Theta_{2,1}, x_2 \in \Theta_{2,2}, ... \; x_n \in \Theta_{2,n}$$

$$\cdots$$

$$f_k(\theta_k, x_1, x_2, ..., x_n) = C_{j,k} \; if \; x_1 \in \Theta_{j,1}, x_2 \in \Theta_{j,2}, ... \; x_n \in \Theta_{j,n}$$

where $\Theta_{i,j}$ are open or closed real intervals, $x_i$ are the input parameters and $\theta_k = \{all \; C_{j,k}, all \; \Theta_{j,n}\}$ is a list of parameters which encapsulates the tree structure.

A CART can be visualized as a sequence of questions arranged in a tree-like structure with branch and leaf nodes. A branch node is a splitting decision point dependent on the input data, and each leaf node is the final classification or regression result.

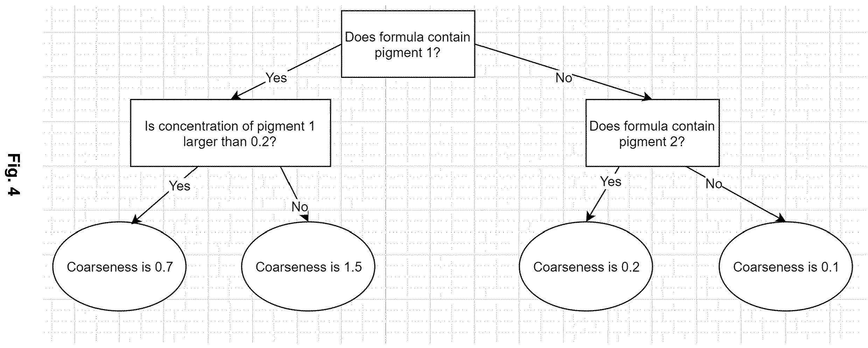

An example CART for coarseness prediction is depicted in Fig. 4 (leaf nodes are round and branch nodes are square).

The corresponding tree function $ff_k(c_1,c_2)$ is a function of two pigment concentrations $c_1$ and $c_2$:

$$f_k(c_1, c_2) = 0.7 \; if \; c_1 > 0.2$$

$$f_k(c_1, c_2) = 1.5 \; if \; 0 < c_1 < 0.2$$

$$f_k(c_1, c_2) = 0.2 \; if \; c_1 = 0 \; and \; c_2 > 0$$

$$f_k(c_1, c_2) = 0.1 \; if \; c_1 = 0 \; and \; c_2 = 0$$

Bagged trees

Bagged trees is a ML method for classification and regression that operates by constructing a multitude of CARTs at training time and outputting the class (classification) or mean prediction (regression) of the individual trees. It uses bootstrap aggregation, an ensemble method, which builds multiple CARTs by resampling training data with replacement, and voting the trees for a consensus prediction in case of classification, and averaging in case of regression.

Given the list of features $x_i$ and a list of targets $y_i$, the algorithm first selects B random samples with replacement (so-called "bootstrap sampling"). For $b$ = 1, ..., $B$: sample, with replacement, $n$ training examples from $x_i$, $y_i$; call these $X_b$, $Y_b$, then train a regression tree $f_b$ on $X_b$, $Y_b$. B is a free parameter and is separately optimized for each client database.

Predictions for unseen samples $x'$ can be made by averaging the predictions from the individual regression trees on $x'$:

$$\hat{f} = \frac{1}{B} \sum_{b=1}^{B} f_b(x')$$

Bootstrap sampling provides a way to create uncorrelated trees, which helps reducing bias and variance for the average of many trees, as each individual tree may be highly sensitive to noise in the training set.

In addition, the algorithm trains each tree on a random subset of features (so-called "feature bagging"). This helps additionally decorrelate trees by not allowing a single feature that is a good predictor to dominate majority of the $B$ trees. This bagged trees variant is also known as a "random forest".

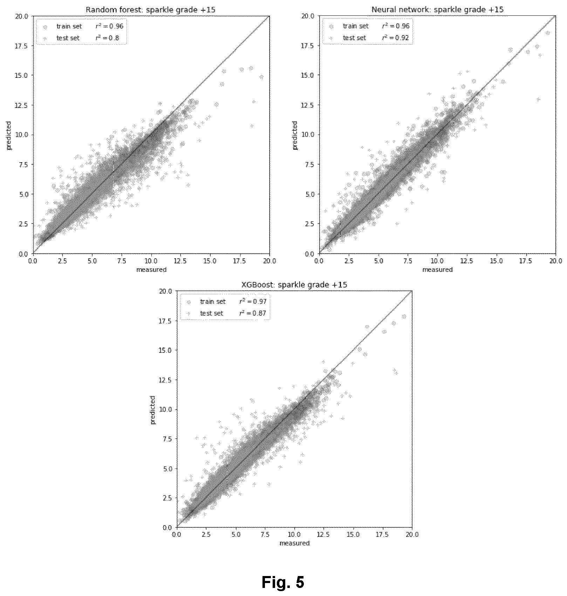

Fig. 5 shows a comparison of three different machine learning algorithms for TP (random forests on the left, neural network in the middle, and XGBoost on the right). The comparison is made on the whole database (from which 70% is the train set, blue dots, and 30% is the test set, yellow dots) on one single texture parameter: sparkle grade at +15 degrees illumination angle. All other texture parameters show a very similar pattern. X and y axis correspond to measured and predicted sparkle grade. A perfect prediction would be that all dots are on the diagonal line. The further they are from the diagonal line the worse is the prediction, which is also characterized by $r^2$ value (best if close to 1).

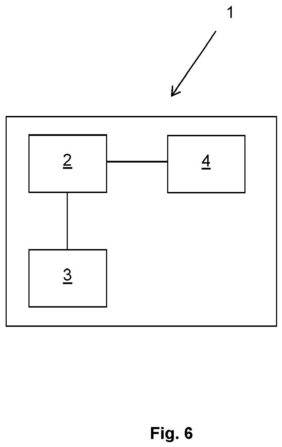

Fig. 6 is a schematic illustration of the system 1 according to the sixth aspect. The system is in its entirety identified by reference sign 1 and comprises a computer 2, an electronic data storage device (such as a hard disc or solid state drive) 3 for storing at least the spectral pigment sample data and the coating formula data and a goniospectrophotometer 4. The components of the system 1 have the functionalities and properties explained above with regard to the sixth aspect of this disclosure.

**Claims**

1. A computer-implemented method of training a likelihood-based computational model for determining a formula for a pigment coating, the method comprising the following steps:

    a) acquiring (S11) formula texture data describing a formula of pigment concentrations and an associated set of texture parameters, the set of texture parameters being defined by sparkle texture in dependence on a finite number of measurement geometries defined by illumination directions and detection directions relative to a surface coated with the respective formula; and
    b) determining (S12), by inputting the formula texture data into a function which establishes a likelihood-based relation between formulae of pigment concentrations and associated texture parameters, model parameter data describing parameters of a likelihood-based computational model for establishing a relation between a set of texture parameters and the respective formula.

2. The method according to the preceding claim, wherein the computational model comprises or consists of a machine learning algorithm.

3. The method according to any one of the preceding claims, wherein a classification and regression tree is part of the computational model.

4. The method according to claim 1, wherein a boosted trees algorithm is part of the computational model.

5. The method according to claim 1, wherein a bagged trees algorithm is part of the computational model.

6. The method according to any one of the preceding claims, wherein the parameters define a tree structure and a leaf score of the computational model.

7. A computer-implemented method of determining a texture of a surface coated with a pigment, the method comprising the following steps:

   a) acquiring (S21) spectral pigment sample data describing a set of texture parameters of the coated surface generated by using a finite number of measurement geometries defined by illumination and detection positions; and

   b) determining (S22), by inputting the spectral pigment sample data into a function which establishes a likelihood-based relation between formulae of pigment concentrations and associated texture parameters, the function being part of a computational model which has been trained by executing the method according to any one of the preceding claims, formula prediction data describing a formula for the coating associated with a set of texture parameters which matches, according to a certain likelihood determined by the computational model, the set of texture parameters described by the spectral pigment sample data.

8. The method according to the preceding claim, comprising:

   acquiring coating formula data describing formulae for generating a pigment coating with a predetermined set of texture parameters; and

   determining, based on the spectral pigment sample data and the coating formula data, matching formula data describing whether there is formula described by the coating formula data having a predetermined set of texture parameters which matches the texture parameters described by the spectral pigment sample data to a predetermined extent,

   wherein the formula prediction data is determined if the matching formula data describes that there is no formula described by the coating formula data having a predetermined set of texture parameters which matches the set of texture parameters described by the spectral pigment sample data to the predetermined extent.

9. A program which, when running on a computer (2) or when loaded onto a computer (2), causes the computer (2) to perform the method steps of the method according to any one of the preceding claims.

10. A program storage medium on which the program according to the preceding claim is stored or a program storage medium on which data defining the parameters and the architecture of a likelihood-based computational model which has been trained by executing the method according to any one of claims 1 to 6 is stored.

11. A data carrier signal carrying the program according to claim 9, or a data carrier signal carrying data defining the parameters and the architecture of a likelihood-based computational model which has been trained by executing the method according to any one of claims 1 to 6.

12. A data stream which carries the program according to claim 9, or a data stream which carries data defining the parameters and the architecture of a likelihood-based computational model which has been trained by executing the method according to any one of claims 1 to 6.

13. At least one computer (2) comprising at least one processor and a memory, wherein the program according to claim 9 is running on the at least one processor or loaded into the memory of the computer.

14. A system (1) for determining a texture of a surface coated with a pigment, comprising:

   a) the at least one computer (2) according to the preceding claim; and

   b) at least one electronic data storage device (3) storing the spectral pigment sample data and coating formula data,

wherein the at least one computer (2) is operably coupled to

- the at least one electronic data storage device (3) for acquiring, from the at least one electronic data storage device (3), the spectral pigment sample data and coating formula data, and
- the at least one electronic data storage device (3) for storing, in the at least one electronic data storage device (3), at least the formula prediction data.

15. The system (1) according to the preceding claim, further comprising

a goniospectrophotometer (4) configured to detect, from the surface coated with the pigment, optical signals and transforming these signals into electronic signals corresponding to the spectral pigment sample data, wherein

the goniospectrophotometer (4) is operatively coupled to the at least one electronic data storage device (3) for storing, in the at least one electronic data storage device (3), the spectral pigment sample data.

```
┌─────────────────────────────────┐
│              S11                │
│    acquire formula texture data │
│                                 │
└─────────────────────────────────┘
                 │
                 ▼
┌─────────────────────────────────┐
│              S12                │
│    determine model parameter    │
│              data               │
└─────────────────────────────────┘
```

**Fig. 1**

```
┌─────────────────────────────────┐
│              S21                │
│    acquire spectral pigment     │
│          sample data            │
└─────────────────────────────────┘
                 │
                 ▼
┌─────────────────────────────────┐
│              S22                │
│   determine formula prediction  │
│              data               │
└─────────────────────────────────┘
```

**Fig. 2**

| Formula | Pigment1 | Pigment2 | Pigment3 | Pigment4 | Pigment5 | Pigment6 | Pigment7 | Pigment8 | Pigment9 | Pigment10 | Pigment11 | Pigment12 | Pigment13 | Pigment14 | Pigment15 | Pigment16 | Pigment17 | Pigment18 | Pigment19 |
|---|---|---|---|---|---|---|---|---|---|---|---|---|---|---|---|---|---|---|---|
| F01 | 0 | 0 | 0 | 0 | 0 | 0 | 0 | 0 | 0 | 0.6 | 0 | 0 | 0 | 0 | 0 | 0 | 0 | 0 | 0 |
| F02 | 0 | 0 | 0 | 0.19 | 0 | 0 | 0 | 0.11 | 0 | 0.15 | 0 | 0.1 | 0 | 0 | 0 | 0 | 0 | 0 | 0 |
| F03 | 0 | 0 | 0 | 0 | 0 | 0.05 | 0 | 0.74 | 0 | 0 | 0 | 0 | 0 | 0 | 0 | 0 | 0 | 0 | 0 |
| F04 | 0 | 0 | 0 | 0.07 | 0 | 0 | 0 | 0 | 0 | 0.09 | 0 | 0 | 0 | 0 | 0.14 | 0 | 0 | 0.41 | 0 |
| F05 | 0 | 0 | 0 | 0.53 | 0 | 0.05 | 0 | 0.17 | 0 | 0 | 0 | 0 | 0 | 0 | 0 | 0 | 0 | 0.33 | 0 |
| F06 | 0 | 0 | 0 | 0 | 0 | 0 | 0 | 0 | 0 | 0 | 0.39 | 0.68 | 0 | 0 | 0 | 0 | 0 | 0 | 0 |
| F07 | 0 | 0 | 0 | 0.1 | 0 | 0 | 0 | 0 | 0 | 0 | 0.43 | 0 | 0.11 | 0 | 0 | 0 | 0 | 0 | 0 |
| F08 | 0 | 0 | 0 | 0 | 0 | 0 | 0 | 0 | 0 | 0.15 | 0 | 0 | 0 | 0 | 0 | 0 | 0 | 0 | 0 |
| F09 | 0.15 | 0.24 | 0 | 0 | 0 | 0 | 0 | 0 | 0 | 0.15 | 0 | 0 | 0.23 | 0 | 0.14 | 0 | 0 | 0 | 0 |
| F10 | 0 | 0 | 0 | 0 | 0 | 0 | 0 | 0.35 | 0.16 | 0 | 0 | 0 | 0 | 0 | 0 | 0 | 0 | 0 | 0 |
| F11 | 0 | 0 | 0 | 0 | 0 | 0 | 0 | 0 | 0 | 0 | 0 | 0.24 | 0 | 0 | 0 | 0 | 0.34 | 0 | 0 |
| F12 | 0 | 0 | 0.46 | 0 | 0.43 | 0 | 0 | 0 | 0 | 0 | 0 | 0 | 0 | 0 | 0 | 0 | 0 | 0 | 0 |
| F14 | 0 | 0 | 0 | 0 | 0 | 0 | 0.38 | 0 | 0 | 0 | 0 | 0 | 0 | 0 | 0 | 0 | 0 | 0 | 0 |
| F15 | 0 | 0 | 0.65 | 0 | 0 | 0 | 0 | 0 | 0 | 0 | 0 | 0 | 0 | 0.07 | 0 | 0 | 0 | 0 | 0.51 |
| F16 | 0 | 0 | 0 | 0 | 0 | 0 | 0 | 0 | 0 | 0 | 0 | 0 | 0 | 0.15 | 0 | 0 | 0 | 0 | 0.76 |
| F18 | 0 | 0 | 0 | 0 | 0 | 0 | 0 | 0 | 0 | 0 | 0 | 0 | 0 | 0 | 0 | 0 | 0 | 0 | 0 |
| F19 | 0 | 0 | 0 | 0 | 0 | 0 | 0 | 0 | 0 | 0 | 0 | 0 | 0 | 0 | 0.47 | 0 | 0 | 0 | 0 |
| F20 | 0.43 | 0 | 0 | 0 | 0 | 0 | 0 | 0 | 0 | 0 | 0 | 0 | 0 | 0 | 0 | 0.06 | 0 | 0 | 0.14 |

**Fig. 3**

Fig. 4

**Fig. 5**

1

2

4

3

**Fig. 6**

# EP 3 839 480 A1

Europäisches
Patentamt

European
Patent Office

Office européen
des brevets

# EUROPEAN SEARCH REPORT

**Application Number**

EP 19 21 8083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/078936 A1 (BISCHOFF GUIDO [DE] ET AL) 14 March 2019 (2019-03-14) | 1-7,9-14 | INV. G01N21/25 |
| Y | * paragraphs [0001], [0002], [0006], [0008] * * paragraphs [0020], [0022], [0025] * * paragraphs [0029] - [0039] * * paragraphs [0044], [0053] - [0058] * * paragraphs [0067] - [0072] * ----- | 8,15 | G01N21/57 G01J3/50 G01N21/27 G06N3/08 G01J3/46 |
| Y | US 2014/195468 A1 (MOHAMMADI MAHNAZ [US] ET AL) 10 July 2014 (2014-07-10) * paragraph [0002] * * paragraphs [0022] - [0024] * * paragraph [0065] * * paragraph [0073] * ----- | 8,15 | |

|  |
|---|
| **TECHNICAL FIELDS SEARCHED (IPC)** |
| G01N G01J G06N |

The present search report has been drawn up for all claims

| Place of search | Date of completion of the search | Examiner |
|---|---|---|
| Munich | 4 June 2020 | Consalvo, Daniela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 21 8083

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2020

| Patent document cited in search report | | Publication date | Patent family member(s) | | Publication date |
|---|---|---|---|---|---|
| US 2019078936 | A1 | 14-03-2019 | CN | 108139271 A | 08-06-2018 |
| | | | DE | 102015118551 A1 | 04-05-2017 |
| | | | EP | 3368872 A1 | 05-09-2018 |
| | | | JP | 2019500588 A | 10-01-2019 |
| | | | KR | 20180074756 A | 03-07-2018 |
| | | | US | 2019078936 A1 | 14-03-2019 |
| | | | WO | 2017071824 A1 | 04-05-2017 |
| US 2014195468 | A1 | 10-07-2014 | EP | 2721542 A2 | 23-04-2014 |
| | | | US | 2014195468 A1 | 10-07-2014 |
| | | | US | 2014244558 A1 | 28-08-2014 |
| | | | WO | 2012177508 A2 | 27-12-2012 |

EPO FORM P0459

For more details about this annex : see Official Journal of the European Patent Office, No. 12/82